# EUROPÄISCHE PATENTANMELDUNG

(11) **EP 0 634 493 A2**
(43) Veröffentlichungstag der Anmeldung: **18.01.1995**
(21) Anmeldenummer: 94107123.5
(22) Anmeldetag: 06.05.1994
(51) Int. Cl.: C13F 1/00

(54) **Verfahren und Vorrichtung zur kontinuierlichen und automatischen Herstellung von gekochter Zuckermasse**

(30) Priorität: 25.06.1993 IT MI931383
(71) Anmelder: CARLE & MONTANARI S.p.A., I-20141 Milano (IT)
(72) Erfinder: Bertini, Angelo, I-20017 Rho (IT)
(74) Vertreter: Mayer, Hans Benno, Dipl.-Ing.

(57) **Zusammenfassung**

Verfahren und Vorrichtung zum kontinuierlichen, automatischen Herstellen von gekochter Zuckermasse, wobei am Ende der Anlage fuer die Erzeugung der gekochten Zuckermasse eine Einrichtung zum Messen der Temperatur und der Feuchtigkeit der Zuckermasse angeordnet ist, dass die von der Messeinrichtung abgegebenen Meßsignale mit Sollwerten verglichen werden und in Abhaengigkeit von einem Differenzsignal der Dampfdruck in der Kochkammer und/oder die Drehgeschwindigkeit der Speisepumpe zum Zufuehren des Zuckersirups und/oder der Wert des Unterdruckes im Inneren der Unterdruckkammer veraendert werden.

## Beschreibung

Die vorstehende Erfindung betrifft ein verfahren und eine Vorrichtung zum automatischen und kontinuierlichen Herstellen gekochter Zuckermasse, besonders Zuckermasse fuer die Erzeugung von Bonbons.

Es sind vom Stand der Technik her Anlagen fuer die kontinuierliche Erzeugung gekochter Zuckermasse bekannt. In diesen Anlagen werden ueblicherweise die Fertigungsparameter, wie z. B. die Kochtemperatur des Zuckersirups, festgelegt. Dies erfolgt, indem von Hand die Temperatur des Dampfes eingeregelt wird, der auf eine Rohrwendel einwirkt, die fuer den Durchlauf des Erzeugnisses durch eine Kochkammer vorgesehen ist. Eine weitere Moeglichkeit, die Parameter des Kochvorganges zu beeinflussen, ist darin zu sehen, dass die Zuckermenge, die pro Zeiteinheit der Rohrwendel zugefuehrt wird, veraendert wird.

Eine weitere Moeglichkeit, die Parameter des Erzeugnisses zu beeinflussen, besteht in einer Aenderung des Unterdruckwertes, der in der Unterdruckkammer vorherrscht, indem z. B. ein teilweises Oeffnen der Ansaugleitung der Unterdruckpumpe erfolgt.

Durch die Beeinflussung von Hand der vorgenannten physikalischen Groessen ist es moeglich, theoretisch eine Masse aus gekochtem Zucker herzustellen, die geeignete Merkmale fuer die anschliessende Weiterverarbeitung aufweist und eine Herstellung von Qualitaetsbonbons erlaubt.

In der Praxis konnte aber festgestellt werden, dass diese Regelvorgaenge empirisch durchgefuehrt werden und auf der Erfahrung der Person beruhen, die fuer das ordnungsgemaesse Arbeiten der Kochanlage verantwortlich ist.

Diese Bedienungsperson kann aber nur in subjektiver Weise die Materialeigenschaften und Parameter der Zuckermasse in Hinblick auf die Materialeigenschaften des Endproduktes beurteilen.

Die Regelvorgaenge, die von der Bedienungsperson vorgenommen werden, stellen also nur ungefaehre Steuervorgaenge dar, die keine konstante Qualitaet des Enderzeugnisses gewaehrleisten koennen; aus diesem Grunde ist es bei den Anlagen bekannter Bauart erforderlich, in gewissen Zeitabstaenden die Parameter der hergestellten Zuckermasse zu pruefen.

Diese Kontrollvorgaenge werden auch heute noch mittels eines Analyseverfahrens des Erzeugnisses durchgefuehrt. Es wird durch Labormessung der Feuchtigkeitsgehalt der gekochten Zuckermasse festgestellt; diese Vorgaenge sind in einem geeigneten Laboratorium durchzufuehren.

Da diese Ueberpruefung des Feuchtigkeitsgehaltes der gekochten Zuckermasse mit besonderen Geraeten vorzunehmen ist, die oertlich getrennt von den Fertigungsanlagen installiert sind, ist es unvermeidbar, dass die periodisch durchzufuehrenden Analysen einen verhaeltnismaessig langen Zeitraum in Anspruch nehmen. Es ist also nicht moeglich, genaue Daten in Realzeit vorliegen zu haben, wie das hingegen fuer eine moderne, kontinuierliche, industrielle Fertigung erfoderlich waere.

Die unvermeidlichen Schwankungen der Materialeigenschaften der gekochte Zuckermasse fuehren haeufig zur Erzeugung einer Zuckermasse, die fuer die anschliessenden Fertigungsschritte nicht verwendbar ist, es tritt also nicht nur eine unerwuenschte Qualitaetsschwankung in der Produktion ein, sondern es sind auch erhebliche technische Probleme festzustellen. Diese wirken auf die anschliessenden Bearbeitsvorgaenge, z. B. auf den anschliessende Rollvorgang der Zuckermasse, die Bildung eines Zuckermassestranges oder den Pressvorgang des Erzeugnisses ein.

Aufgrund der grossen Zuckermassen, die in modernen Kochanlagen verarbeitet werden koennen, besteht ein erhebliches Risiko, dass Zuckermassen hergestellt werden, die fuer eine Verarbeitung in Bonbons nicht geeignet sind. Bevor diese Fehlproduktion durch die Person, die fuer die Anlage verantwortlich ist, bemerkt wird, vergeht erhebliche Zeit und ein Einwirken von Hand zum Veraendern der Fertigungsparameter erfolgt mit Verspaetung.

Es ist daher Aufgabe der vorstehenden Erfindung, die Nachteile des Standes der Technik zu vermeiden und ein Verfahren und eine Einrichtung vorzuschlagen, die es ermoeglichen, auf automatische Weise die Parameter der gekochten Zuckermasse in einer modernen Fertigungsanlage konstant zu halten und die Moeglichkeit zu schaffen, die wichtigsten Merkmale des Endproduktes in Realzeit zu veraendern, d. h. den Feuchtigkeitsgehalt und die Temperatur der gekochten Zuckermasse am Auslauf der Fertigungsanlage konstant zu halten.

Diese Aufgabe wird erfindungsgemaess durch ein Verfahren geloest, das vorsieht, dass am Ende der Anlage fuer die Herstellung gekochter Zuckermasse, eine Messung der Temperatur und/oder des Feuchtigkeitsgehaltes der Masse erfolgt und die gebildeten Meßsignale mit einem Sollwert verglichen werden und bei Vorliegen eines Differenzsignales eine Veraenderung des Dampfdruckes in der Kochkammer und/oder der Drehgeschwindigkeit der Einspeisepumpe des Zuckersirups und/oder des Unterdruckes im Inneren der Unterdruckkammer vorgenommen wird.

Die Einrichtung zur Durchfuehrung des erfindungsgemaessen Verfahrens besteht aus einer Sonde zum Messen des Feuchtigkeitsgehaltes und/oder der Temperatur der gekochten Zuckermasse, und die Signalausgaenge der Sonde sind mit einer Datenverarbeitungseinrichtung verbunden, welche Ausgaenge fuer Steuersignale aufweist, und diese Ausgaenge sind mit Regeleinrichtungen einer Foerderpumpe fuer den zu kochenden Zuckersirup und/oder mit einem Ventil zum Veraendern des Dampfdruckes in der Kochkammer und/oder mit einem Belueftungsventil, das zwischen der Unterdruckpumpe und der Unterdruckkammer angeordnet ist, wirkverbunden.

Es hat sich ferner als vorteilhaft erwiesen, dass die Ausgaenge des Meßgeraetes, das die Temperatur der gekochten Zuckermasse ermittelt, mit einem Vergleichsglied oder einem Datenverarbeitungsgeraet verbunden sind, dessen Ausgang fuer ein Differenzsignal mit einem einstellbaren Thermostat verbunden ist und das Thermostat mit einer Klimatisierungseinrichtung fuer das Kuehlwasser, das auf das Foerderband der gekochten Zuckermasse einwirkt, wirkverbunden ist.

In vorteilhafter Weise ist zwischen der Einrichtung zum Messen der Feuchtigkeit und/oder der Temperatur der gekochten Zuckermasse und den einzelnen Regeleinrichtungen zum Veraendern der physikalischen Parameter eine Datenverarbeitungseinrichtung, z. B. ein Mikroprozessor vorgesehen, der es ermoeglicht, die steuerbaren Einrichtungen einzeln oder in Kombination miteinander zu betaetigen.

Der Gegenstand der vorstehenden Erfindung wird nun genauer beschrieben und anhand eines Ausfuehrungsbeispiel in der beigefuegten Zeichnung dargestellt.

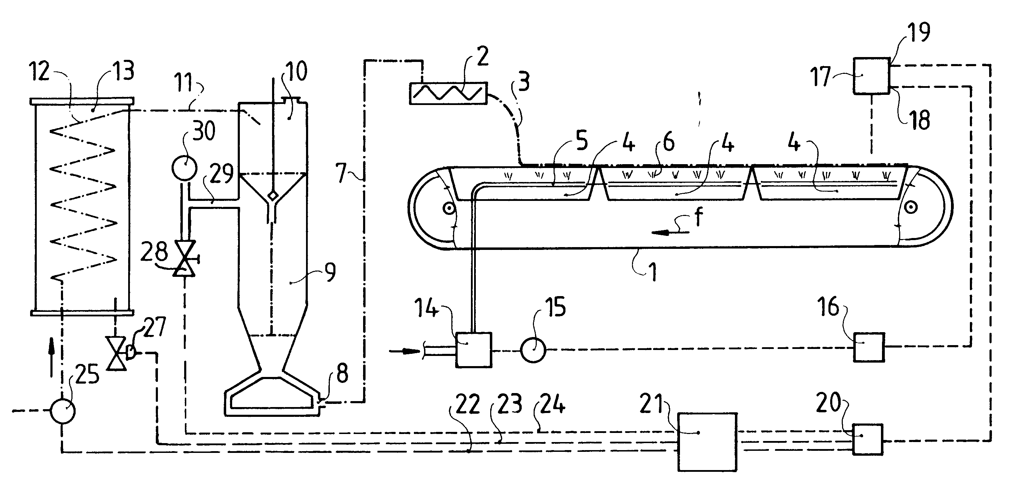

Die Zeichnung zeigt schematisch eine Einrichtung zum Kochen von Zuckermasse fuer die Herstellung von Bonbons zusammen mit den dazugehoerenden Meßeinrichtungen und Steuergeraeten.

Die erfindungsgemaesse Einrichtung besteht aus einem kontinuierlichen Foerderband, das mit 1 gekennzeichnet ist, und in Richtung des Pfeiles f angetrieben wird.

Auf dem oberen Trum des Bandes 1 wird unter Verwendung einer mit einer Foerderschnecke ausgeruesteten Dosier- und Mischeinrichtung 2 ein Strom 3, bestehend aus gekochter Zuckermasse, abgelegt, Masse, die fuer die Herstellung von Bonbons bestimmt ist.

Unterhalb des oberen Trums des Foerderbandes 1 sind Wannen 4 vorgesehen, die zum Foerderband hin offen sind und von einem Rohr 5 durchdrungen werden, das Spruehdruesen 6 aufweist, die das Band 1 von unten bespruehen und somit ein Kuehlen und Klimatisieren des Zuckermassestroms 3 ermoeglichen.

Der Dosiereinrichtung 2 wird die gekochte Zuckermasse ueber eine Rohrleitung 7 zugefuehrt, die mit dem Ausgang 8 eines Behaelters in Wirkverbindung steht. In der unteren Kammer 9 des Behaelters wird ein starker Unterdruck erzeugt, um die Moeglichkeit zu schaffen, auf die Fluessigkeitsmolekuele des Zuckersirups einzuwirken, der ueber eine oben liegende Expansionskammer 10 zugefuehrt wird.

In die Expansionskammer 10 muendet ein Zufuehrrohr 11 ein, das den Fortsatz einer Rohrwendel 12 bildet, die im Inneren einer Kammer 13 angeordnet ist, in der die thermische Beeinflussung des Zuckersirups erfolgt.

Die Rohrleitung 5, die fuer die Zufuhr von Wasser zu den Duesen 6 der Klimatisierungsanlage 4 vorgesehen ist, durchlaeuft eine Kuehlanlage 14, und diese Kuehlanlage 14 ist mit einem steuerbaren Thermostat 15 wirkverbunden.

Das Thermostat ist unter Zwischenschaltung eines Vergleichsgliedes 16 oder einer kleineren Datenverarbeitungsanlage zur Auswertung der Differenzsignale mit dem Signalausgang 18 einer Einrichtung 17, in vorteilhafter Weise einer optisch-elektronischen Einrichtung, verbunden. Diese bekannte Einrichtung erlaubt es, beruehrungslos und direkt die Temperatur der gekochten Zuckermasse 3 zu messen.

Einrichtungen dieser Art sind vom Stand der Technik her bekannt und werden z. B. von der Firma Pier-Electronic GmbH, Hofheim-Wallau, Deutschland, vertrieben.

Die Einrichtung 17 ermoeglicht es, gleichzeitig und ohne Beruehrung des Produktes, in Realzeit die Feuchtigkeit der gekochten Zuckermasse 3 zu messen.

Das erzeugte Meßsignal, das am Ausgang 19 ansteht, wird einem Vergleichsglied 20 oder in vorteilhafter Weise einer kleineren EDV-Anlage 21, z. B. einem Mikroprozessor zugefuehrt. Diese weist Ausgaenge 22, 23 und 24 fuer die Uebertragung von Steuersignalen auf.

Der Ausgang 22 ist mit Steuereinrichtungen einer Pumpe 25 wirkverbunden, und durch Veraenderung der Drehzahl des Pumpenrades 25 wird es ermoeglicht, eine genau dosierte Sirupmenge, die groesser oder kleiner sein kann, ueber die Rohrwendel 12 der Kocheinrichtung 13 zuzuleiten, wodurch die Verweilzeit des Sirups im Inneren der Kocheinrichtung 13 gesteuert wird.

Die Leitung 23 steht mit den Steuermitteln eines regelbaren Ventils 27 in Wirkverbindung. Das Ventil ist vorgesehen, um den Dampfdruck, der der Kochkammer 13 zugefuehrt wird, zu steuern.

Es wird somit moeglich, eine genaue Regelung der Kochtemperatur im Inneren der Kammer 13 vorzunehmen.

Die Leitung 23 steht mit Regeleinrichtungen eines steuerbaren Ventils 27 in Wirkverbindung. Das Ventil ist vorgesehen, um den Dampfdruck, der der Kammer 13 zugefuehrt wird, zu regeln. Es wird somit moeglich, eine genaue Regelung der Kochtemperatur im Inneren der Kammer 13 durchzufuehren.

Schliesslich ist die Leitung 24 mit einem steuerbaren Ventil 28 (Drosselventil) wirkverbunden, das in die Rohrleitung 29 zwischen der Unterdruckkammer 9 und der Unterdruckpumpe 30 angeordnet ist.

Durch Einwirken auf den Oeffnungs- oder Schliessgrad des Drosselventils 28 besteht die Moeglichkeit, den Unterdruckwert im Inneren der Unterdruckkammer 9 wirksam zu beeinflussen, wodurch eine Beeinflussung der Verdampfungsgeschwindigkeit der verbleibenden Wassermenge, die in der Zuckermasse enthalten ist, erfolgt. Dadurch wird die Moeglichkeit geschaffen, den Feuchtigkeitsgrad des Erzeugnisses, das durch den Auslauf 8 austritt, zu beeinflussen.

Somit, durch die Moeglichkeit, ueber eine indirekte Messung in Realzeit die Temperatur sowie den Feuchtigkeitsgehalt des gekochten Zuckermassestroms 3 festzustellen, macht es die Erfindung moeglich, diese Werte unter Kontrolle zu halten und die Fertigungsparameter zu veraendern, um gekochte Zuckermasse herzustellen, die konstante technische Werte aufweist.

Es ist besonders vorteilhaft, eine Aenderung des Dampfdruckes in der Kochkammer oder eine Aenderung der Drehgeschwindigkeit des Pumpenrades fuer den Transport des Zuckersirups vorzunehmen. Versuche haben aber bewiesen, dass die besten Ergebnisse, vom Standpunkt der Regeltechnik her, durch Veraendern des Unterdruckes im Inneren der Unterdruckkammer erzielt werden. Dieses Regelverfahren fuehrt zu einer schnelleren Information hinsichtlich des Feuchtigkeitsgehaltes in der gekochten Zuckermasse.

Die Funktionsweise des Verfahrens sowie der dazugehoerenden Einrichtung gemaess der vorstehenden Erfindung ist folgende:
Mit der Einrichtung 17 wird die Temperatur der gekochten Zuckermasse 3 gemessen, folglich steht am Ausgang 18 ein entsprechendes Signal an, das im Vergleichsglied 16 oder in einem Mikroprozessor mit einem Sollwert verglichen wird. Dabei wird ein Differenzsignal gebildet, das als Steuersignal dem Thermostat 15 zugeleitet wird, der auf die Kuehleinrichtung 14 fuer das Klimatisierungswasser in der Art einwirkt, dass bei zu niedriger Temperatur der gekochten Zuckermasse 3 die Kuehlwirkung des Wassers im Inneren der Kuehleinrichtung 14 vermindert wird, und im Fall einer zu heissen Zuckermasse 3 die Kuehlwirkung in der Kuehleinrichtung 14 erhoeht wird, indem kaelteres Wasser zu den Duesen 6 geleitet wird.

Mit der Vorrichtung 17 kann aber auch der tatsaechliche prozentuale Feuchtigkeitsgehalt der gekochten Zuckermasse 3 gemessen werden. Das gebildete Meßsignal wird vom Ausgang 19 einem weiteren Vergleichsglied 20 oder, alternativ, einer kleinen Datenverarbeitungsanlage 21, die programmierbar ist, zugefuehrt.

Entsprechend den Werten der gebildeten Differenzsignale und der daraus gebildeten Steuersignale, die ueber die Leitungen 22, 23 und 24 geleitet werden, ist es moeglich, folgende Regelvorgaenge vorzunehmen:
Ueber das Steuersignal, das ueber die Leitung 22 geleitet wird, kann die Drehzahl der Pumpe 25, die fuer die Zufuehrung des Zuckersirups an die die Kochkammer 13 durchlaufende Wendel 12 vorgesehen ist, veraendert werden, und die Drehgeschwindigkeit des Pumpenrades erhoeht oder vermindert werden.

Wenn die Drehzahl der Pumpe 25 vermindert wird, wird weniger Zuckersirup eingespeist und der Zuckersirup hat eine laengere Verweilzeit in der Rohrwendel 12 und wird somit ueber einen laengeren Zeitraum der Waermewirkung in der Kammer 13 ausgesetzt.

Wird hingegen die Pumpe 25 mit einer hoeheren Drehzahl angetrieben, so erfolgt ein groesserer Durchfluss an Zuckersirup durch die Wendel und, aufgrund der groesseren Transportgeschwindigkeit, die sich einstellt, wird die Verweilzeit des Zuckersirups in der Kammer 13, in der die Waermebehandlung des Zuckersirups erfolgt, vermindert.

Mit dem Steuersignal 23, das der Pumpe 26 und dem Ventil 27 zugefuehrt wird, wird es moeglich, mikrometrisch den Dampfdruck zu regeln, mit dem der Dampf der Kochkammer 13 zugefuehrt wird. Wenn Dampf mit geringem Dampfdruck zugefuehrt wird, sinkt die Temperatur im Inneren der Kochkammer 13. Wird aber Dampf mit hohem Druck zugefuehrt, steigt die Temperatur im Inneren der Kammer 13. In diesem Falle kann der Zuckersirup, der die Kammer 13 in der Rohrwendel 12 durchlaeuft, ueber unterschiedliche Temperaturen beeiflusst werden.

Schliesslich steht die Leitung 24 mit einem Lueftungsventil 28, das steuerbar ausgebildet ist, in Wirkverbindung. Dieses Ventil ist in die Leitung 29 eingesetzt, die sich von der Unterdruckkammer 9, zu einer Unterdruckpumpe 33 erstreckt. Wird waehrend des Betriebes der Unterdruckpumpe 30 das Ventil 28 mehr oder weniger geoeffnet, wird auch der Wert des Unterdruckes im Inneren der Kammer 9 beeinflusst. Ist das Ventil 28 vollstaendig geschlossen, so wird durch die Pumpe 30 ein maximaler Unterdruck im Inneren der Kammer gebildet. Mit einem gesteuerten Oeffnen des Ventiles 28 wird es moeglich, den Unterdruck im Inneren der Kammer (durch Ansaugen von Sekundaerluft) und somit den Unterdruck, der die gekochte Zuckermasse beeinflusst, und in der Kammer 9 vorherrscht, zu beeinflussen.

## Patentansprüche

1. Verfahren zum kontinuierlichen und automatischen Erzeugen von gekochter Zuckermasse fuer die Herstellung von Bonbons, **dadurch gekennzeichnet**, dass am Ende einer Fertigungseinrichtung fuer die Herstellung gekochter Zuckermasse, die Temperatur und/oder die Feuchtigkeit der Zuckermasse gemessen wird, dass die sich einstellenden Meßsignale mit einem Sollwert verglichen werden und bei Entstehen eines Differenzsignales der Dampfdruck in der Kochkammer und/oder die Drehgeschwindigkeit des Pumpenrades fuer den Transport des Zuckersirups und/oder der Unterdruck im Inneren der Unterdruckkammer veraendert werden.

2. Verfahren, nach Patentanspruch 1, **dadurch gekennzeichnet**, dass am Ende der Fertigungsanlage die Temperatur der gekochten Zuckermasse gemessen wird und das erhaltene Meßsignal mit einem Sollwert verglichen wird und bei Entstehen eines Differenzsignales ein Aendern der Wassertemperatur in der Klimatisierungsanlage erfolgt, mit der das obere Trum des Transportbandes fuer die Zuckermasse beeinflusst wird.

3. Vorrichtung, zur Durchfuehrung des Verfahrens nach Patentanspruch 1, **dadurch gekennzeichnet**, dass eine Meßeinrichtung (17) zum Erfassen des Feuchtigkeitsgehaltes und/oder der Temperatur der gekochten Zuckermasse (3) vorgesehen ist, dass die Ausgaenge (18, 19) der in der Messeinrichtung (3) gebildeten Signale mit einer Datenverarbeitungsanlage (20, 21) in Wirkverbindung stehen, die Ausgaenge (22, 23, 24) fuer Steuersignale aufweist und dass diese Ausgaenge (22, 23, 24) mit Steuereinrichtungen fuer den Antrieb einer Pumpe (25) zum Zufuehren des zu kochenden Zuckersirups und/oder zum Betaetigen eines Ventils (27) zum Veraendern des Dampfdruckes in der Kochkammer (13) und/oder zum Betaetigen eines Drosselventiles (28), das zwischen der Unterdruckpumpe 30 und der Unterdruckkammer (9) vorgesehen ist, verbunden sind.

4. Vorrichtung nach Patentanspruch 3, **dadurch gekennzeichnet**, dass der Ausgang (18) der Meßeinrichtung (17) zum Erfassen der Temperatur der gekochten Zuckermasse (3) mit einem Vergleichsglied (16) oder einer Datenverarbeitungsanlage wirkverbunden ist und der Ausgang fuer das Differenzsignal mit einem einstellbaren Thermostat (15) wirkverbunden ist, das auf eine Kuehleinrichtung (14) fuer das Kuehlwasser zum Beeinflussen des Transportbandes der gekochten Zuckermasse (3) einwirkt.

5. Vorrichtung nach Patentanspruch 3, **dadurch gekennzeichnet**, dass zwischen der Einrichtung (17) zum Messen des Feuchtigkeitsgehaltes und der Temperatur der gekochten Zuckermasse (3) und der Regeleinrichtung (15, 25, 26, 27, 28, 30) zum Beeinflussen der physikalischen Parameter, eine EDV-Anlage (21, 16, 20) vorgesehen ist, ueber die einzeln oder in Kombination untereinander die Einrichtungen (15, 25, 26, 27, 28, 30) steuerbar sind.
